# EUROPEAN PATENT APPLICATION

(11) **EP 0 658 312 A1**
(43) Date of publication of application: **21.06.1995**
(21) Application number: 94308857.5
(22) Date of filing: 30.11.1994
(51) Int. Cl.: A23C 21/02, A23K 1/08, A23K 1/18

(54) **Food humectant**

(30) Priority: 15.12.1993 US 167248
(71) Applicant: Qualcepts Nutrients, Inc., Minneapolis, Minnesota 55435 (US)
(72) Inventor: Feminella, Joseph, Trumbull, Connecticut 06611 (US)
(74) Representative: MacGregor, Gordon

(57) **Abstract**

Cheese whey permeate is fermented to produce a superior food humectant in a process which includes the preliminary steps of adding a bacteria nutrient yeast extract and diammonium phosphate to maintain the pH at a level of about 5.6, and pasteurizing. The material is then cooled to fermentation temperature, inoculated with a lactic acid producing culture and permitted to ferment to less than about 1% lactose. The fermented mixture is agitated and an alkali such as caustic soda (NaOH) is added to re-adjust the pH to about 5.6, with continued addition to a pH of about 5.8. The product is then pasteurized and evaporated to a concentration of greater than about 60% solids and is ready for packaging.

## Description

### BACKGROUND OF THE INVENTION

This patent application is a continuation-in-part of co-pending application Serial No. 07/864,322, filed April 6, 1992.

The present invention relates generally to edible humectant materials and particularly to those suitable for controlling the moisture content of foods, together with the process for preparing such materials from cheese whey permeate

Humectants, because of their strong affinity for water, are widely utilized for their ability to stabilize the water content of a variety of material. Amounts of added humectants desirably keep the host material within a certain preferred range of moisture content in circumstances wherein the content otherwise tends to vary widely due to changes in the relatively humidity of the ambient. The producers of dog food and cat food, for example, utilize certain Humectants in order to stabilize the moisture content of certain of these products over extended periods of time, giving them a longer shelf life.

Certain salts of lactic acid, most notably alkali metal salts, are known as strongly hygroscopic materials and many, such as sodium lactate, have been found to be edible and compatible with foodstuff. In this regard, it is known to prepare food seasonings from the fermentation of cheese whey using lactic acid bacteria and blending extracted portions of liquid and solid fractions produced by centrifuging the fermented solution. The liquid fraction of the resulting liquid/solid centrifuged fermentation product contains large amounts of lactic acid from which salts are readily formed, for example, by alkali hydroxide neutralization. Such a process is the subject of U.S. Patent 4 699 793 to Eguchi et al. Bailey et al, in U.S. Patent 4 771 001, describe a method of producing substantially pure lactic acid from carbohydrate-containing media (which may be cheese whey permeate) by continuous fermentation followed by dual-phase solvent extraction. The Bailey et al process is directed to the production and extraction of lactic acid using a water immiscible tertiary amine phase followed by alkali treatment. Neither of these references, recognizes the value of such a fermentation product as prepared and without separation or extraction of various constituents as a moisture control mechanism in food.

In accordance with the present invention, the fermentation of cheese whey permeate has been found to produce a particularly desirable humectant material for prepared food products. One application is in pet foods, i.e., dog and cat foods. In accordance with the invention, it has been found unnecessary to separate lactic acid or lactic acid salts or other constituents, save water, from the fermentation product in order to produce a useful humectant material. The humectant materials produced are known to be lactate-rich, containing large amounts of sodium or other alkali metal lactate or ammonium lactate, depending upon the composition of the neutralization the material being used and materials prepared in accordance with the process of the invention have been found to be particularly desirable for application as humectants for foods. Thus, it has been found in accordance with the present invention that material that would usually otherwise become waste products in the manufacture of cheese can be used as the starting materials to make a material particularly useful as a food additive.

### SUMMARY OF THE INVENTION

In accordance with the present invention, cheese whey permeate is utilized as the starting material for the preparation of a food humectant that includes lactate salt, such as sodium lactate, as the principal ingredient. The process of the present invention further provides good yields of lactate-rich humectant material having the requisite attributes of a successful food additive without the need for costly isolation steps to separate the lactate constituent from the pasteurized material produced during the fermentation step. The material generally comprises from about 80% to 90% of lactate, typically sodium lactate, on a dry basis with the balance being edible protein, carbohydrate and mineral materials or the like.

In accordance with the process of the present invention, cheese whey permeate is initially selected and treated so as to contain approximately 5% to 9%, and typically 7%, solids. To the cheese whey permeate, yeast extract, preferably specifically a product sold under the trade designation "Tastone 154", available commercially from Universal Foods Corporation of Milwaukee, Wisconsin is added at approximately 0.25% w/v. In certain instances, cheese whey or other low-cost carbohydrate sources may be employed as well, such as, for example, corn steep liquor (CSL), molasses, or the like. This yeast extract is added as a nutrient for later bacterial growth during fermentation, with such yeast extracts having been utilized in the industry for a number of years last past. To this material, an amount of pH adjusting material, preferably diammonium phosphate is added in the range of approximately 0.2% w/v or as required, to bring the pH to a level between 5.0 and 6.2 and preferably approximately 5.6. Additional acid and/or base materials, compatible with the intended end use of the product may be added to complete the adjustment of the pH, if necessary.

After the pH is adjusted, the mixture is then pasteurized at a temperature of approximately 75°C for at least 16 seconds to sterilize the solution and then permitted to cool to fermenting temperature, i.e., approximately 40°^{C}, depending on the culture used, at which time it is inoculated with a lactic acid producing culture, such as, for example, lactococcus lactis, lactobacillus Bulgaricus, lactobacillus acidophilus, or lactobacillus helviticus. These lactic acid producing cultures are available commercially with such products being available from Miles Laboratories, at Products Division of Rhone-Poulenc of Elkhart, Indiana. Other lactic cultures may be employed as well, including others available from Miles Laboratories, Inc. of Elkhart, Indiana. Following inoculation, the mixture is permitted to ferment to a level until the lactose content is reduced to a low level, i.e., less than about 1%. During fermentation, the pH is controlled so as to be maintained in the range of approximately 5.0 to 6.2, being acceptable, with the preferred acidity reading being approximately 5.6; and with care being taken to avoid lowering the pH to below about 5.0. The pH control is maintained with good agitation during fermentation and the temperature is held at a level of between about 38°^{C} and 42°^{C} for a period of approximately 24 hours. The fermented biomass is then pasteurized at a temperature at or above approximately 75°C for at least 16 seconds under HTST conditions, for pasteurization (sterilization) of the reaction product, with agitation being held to a minimum.

Thereafter, with the pH at approximately 5.8, the material is evaporated to approximately 60% solids content at which point it is ready for packaging. It is not necessary to isolate the lactate constituent from the pasteurized, evaporated biomass material produced from the cheese whey permeate fermentation according to the present invention, as the entire reaction product biomass of material itself has been found suitable for use as a pet food humectant without further processing. On a dry basis, the material generally comprises from about 80% to 90% of lactate salts, the balance being proteins and other edible constituents.

Accordingly, it is a primary object of the present invention to provide an improved fermentation product for use as an humectant additive to foods.

It is a further object of the present invention to provide an improved process for the preparation of a lactate-rich humectant material, particularly derived from a high carbohydrate source, such as cheese whey permeate.

It is yet a further object of the present invention to provide an improved process for the preparation of a fermentation product suitable for use as a food humectant which need not be separated from the fermented biomass.

Other and further objects of the present invention will become apparent to those skilled in the art upon a study of the following specification, appended claims and accompanying drawing.

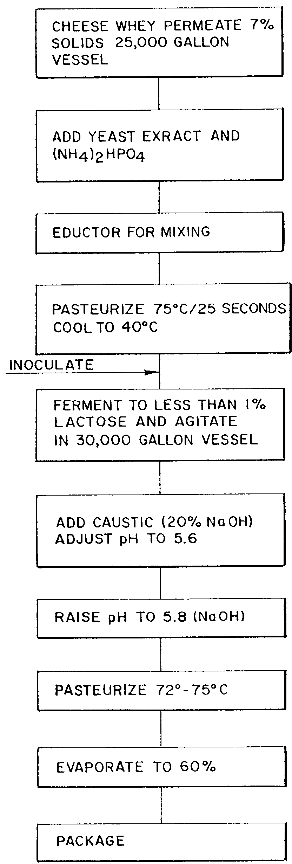

### IN THE DRAWING

The figure is a flow chart of the process of the present invention for the preparation of sodium lactate as derived from cheese whey permeate.

### DESCRIPTION OF THE PREFERRED EMBODIMENT

In accordance with a preferred embodiment of the present invention, the preparation of a batch of humectant material will be described. Cheese whey permeate is treated so as to contain about 7% solids, and is added to a 25,000 gallon holding vessel. Thereafter, yeast extracts in commercially available forms of autolyzed yeast, such as "Amberex 1003" or "KAT", and/or "Tastone 154" are added in an amount of 0.25% w/v. Typically, 520 pounds is added to 25,000 gallons of cheese whey permeate 7% solids. Following the addition of the yeast extract, diammonium phosphate is added at a level of 0.2% w/v, or approximately 417.5 pounds per 25,000 gallon cheese whey permeate. If necessary, the pH is finally adjusted to a level of approximately 5.6 through the addition of either caustic (NaOH) or hydrochloric acid (HCl) as needed. Following the adjustment of pH, the mixture is pasteurized at about 75°C. for a period of at least 25 seconds to sterilize the solution, after which the material is permitted to cool to a temperature of between about 38°C. and 42°C.

The mixture is then inoculated with a lactic acid producing culture, such as that lactic acid producing lactobacillus acidophilus, available commercially, with one suitable lactic acid producing culture being identified as "DSS (R-150)", a product of Miles Laboratories, Inc. Products Division of Rhone-Poulenc of Elkhart, Indiana, in an amount of 1 can (150-300 gallons) or 100 cans of "DSS-150" capacity per 20,000 gallons of permeate supplemented. Thereafter, the material is permitted to ferment until the fermented mass contains less than about 1% of available lactose, whereupon agitation is commenced. A 20% caustic solution (NaOH) is added to again adjust (raise) the pH to approximately 5.6, with care being taken to maintain the pH at a level no lower than 5.0. Also, good agitation is undertaken during this operation, this being required as the amount of lactic acid produced by the fermentation process reduces the pH of the batch of material. Following this adjustment, the pH is thereafter raised to a level of approximately 5.8, again with a 20% caustic solution (NaOH). The fermented mass with pH adjustment is then pasteurized at a temperature of between about 75°C to again produce a sterile product, after which the product is concentrated to a level of about or greater than 60% product. Thereafter, the product may be packaged in drums for shipment, it not being necessary to for further separation of the highly hygroscopic lactate material from the remainder of the processed biomass.

In the event the ammonium form of lactate is desired in the humectant, a solution utilizing ammonium hydroxide (NH₄OH) in lieu of or in conjunction with the caustic soda (NaOH) set forth above may be utilized. One suitable form of ammonium hydroxide for this purpose is sold by Packerland Foods of Juneau, Wisconsin.

As has been indicated, it is important to maintain the pH at a level between 5.2 and 5.8 during fermentation, with particular care being taken to maintain the pH at a level which does not fall below 5.0 at any point in time. In certain instances, if the fermentation rate drops, it has been shown to be helpful to add ammonium hydroxide to raise the pH and yeast extract to raise the fermentation rate. No agitation is normally necessary nor desired, except when the pH is being adjusted, and initially to mix and otherwise blend the culture into the mass. Agitation should be maintained at a minimum in order to minimize the introduction of air and/or oxygen. Slow agitation is normally preferred.

As indicated hereinabove, the process of the present invention is particularly adapted for the production of lactate-rich humectant materials from cheese whey permeate.

This invention has been described herein in considerable detail in order to comply with the Patent Statutes and to provide those skilled in the art with the information needed to apply the novel principles and to construct and use such specialized components as are required. However, it is to be understood that the invention can be carried out by specifically different equipment and devices, and that various modifications, both as to the equipment details and operating procedures, can be accomplished without departing from the scope of the invention itself.

## Claims

1. The method of preparing edible lactate-rich hygroscopic material comprising the steps of:
(a) preparing a cheese whey permeate with a solids content of between about 4% and 15%;
(b) adding bacteria nutrient yeast extract in an amount of between about 0.2 and 0.3% w/v, and diammonium phosphate in an amount of between about .15% and .25% w/v to adjust pH to about 5.6;
(c) pasteurize at a temperature and for a period of time to sterilize the solution and cool to fermenting temperature;
(d) inoculate with a lactic acid producing culture, and permit to ferment to a desired lactose composition;
(e) agitate and add a compatible basic material to adjust and maintain pH of the fermenting mass to between 5.0 and about 6.2 with continued addition of basic material to the fermented mass to a pH of about 5.8;
(f) pasteurize at a temperature and for a period of time to resterilize the solution; and
(g) evaporate to a concentration of about 60% solids.

2. The method of claim 1 wherein the range of solids content of the cheese whey permeate is between about 5% and 10%.

3. The method of claim 1 wherein the compatible base material in step (e) is selected from the group consisting of NaOH, KOH and NH₄OH.

4. The method of controlling the moisture content of host food products comprising the step of adding to the host food product an amount of humectant material comprising the product of the fermentation of cheese whey permeate using a lactic acid culture.

5. The method of claim 4 wherein the humectant material is prepared in accordance with the steps of (a) through (g) of claim 1.

6. The method of claim 1 wherein the host food product is a pet food.

7. An humectant material for controlling the moisture content of host food products comprising the product of the fermentation of cheese whey permeate using a lactic acid culture.

8. The humectant material of claim 7 prepared in accordance with the steps of (a) through (g) of claim 1.
